Europäisches Patentamt

European Patent Office

Office européen des brevets

(11) Veröffentlichungsnummer: **0 345 496**
**A2**

(12) # EUROPÄISCHE PATENTANMELDUNG

(21) Anmeldenummer: **89108915.3**

(22) Anmeldetag: **18.05.89**

(51) Int. Cl.⁴: **H01P 1/213**

(30) Priorität: **09.06.88 DE 3819587**

(43) Veröffentlichungstag der Anmeldung:
**13.12.89 Patentblatt 89/50**

(84) Benannte Vertragsstaaten:
**FR GB IT**

(71) Anmelder: **ANT Nachrichtentechnik GmbH**
**Gerberstrasse 33**
**D-7150 Backnang(DE)**

(72) Erfinder: **Rosenberg, Uwe, Dipl.-Ing.**
**Wunnensteinstrasse 3**
**D-7151 Allmersbach i.T.(DE)**
Erfinder: **Wolk, Dieter, Dipl.-Ing.**
**Kleinheppacher Weg 16**
**D-7054 Korb(DE)**

(54) **Mikrowellen-Multiplexer.**

(57) Um die Leistungsverträglichkeit eines Multiplexers für Mikrowellensignale zu verbessern, wird die Eingangssignalleistung auf mehrere Frequenzweichen (FW1, FW2) aufgeteilt und anschließend wieder zusammengefaßt, so daß jede der Frequenzweichen (FW1, FW2) mit einer geringeren Signalleistung belastet wird.

Ein solcher Multiplexer eignet sich besonders gut für die Satellitenanwendung wegen seiner guten Leistungsverträglichkeit.

Fig.1

EP 0 345 496 A2

### Mikrowellen-Multiplexer

Die vorliegende Erfindung betrifft eine Anordnung zum Multiplexen (bzw. Demultiplexen) von Signalen im Mikrowellenbereich, die verschiedenen Frequenzkanälen zugeordnet sind.

Gerade für die Satellitenanwendung ist eine solche Anordnung so auszulegen, daß sie mit hoher Leistung betrieben werden kann und ein damit verbundener Temperaturanstieg soweit in Grenzen gehalten wird, daß sich das elektrische Verhalten der Anordnung möglichst wenig ändert. Also liegt der Erfindung die Aufgabe zugrunde, eine Anordnung zum Multiplexen bzw. Demultiplexen von Signalen im Mikrowellenbereich anzugeben, die unter Beachtung eines möglichst geringen Gewichts mit solchen Mitteln realisiert ist, daß eine gute Leistungsverträglichkeit gewährleistet ist.

Erfindungsgemäß wird diese Aufgabe durch die Merkmale des Anspruchs 1 gelöst. Zweckmäßige Ausführungen der Erfindung gehen aus den Unteransprüchen hervor.

Es ist an sich bekannt, z.B. aus der US-PS 4 614 920, als Multiplexer eine Frequenzweiche, bestehend aus einem Sammelhohlleiter und mehreren daran angekoppelten, auf die vorhandenen Frequenzkanäle abgestimmten, Bandpaßfiltern, zu verwenden. Hierbei wird die gesamte Leistung der zu multiplizierenden Signale in die Bandpaßfilter eingespeist, wodurch es in der Frequenzweiche zu sehr hohen Spitzenleistungen kommen kann, die unter Vakuumbedingung eine störende Elektronenvervielfachung hervorrufen können. Da der Erfindung zufolge die Signalleistung auf mehrere Frequenzweichen aufgeteilt wird, treten in jeder einzelnen Frequenzweiche erheblich geringere Spitzenleistungen auf, die unschädlich sind und das elektrische Verhalten des Multiplexers nicht stören.

Anhand von zwei in der Zeichnung dargestellten Ausführungsbeispielen wird nachfolgend die Erfindung näher erläutert.

Fig. 1 zeigt einen Multiplexer mit zwei Frequenzweichen und

Fig. 2 zeigt einen erweiterten Multiplexer mit drei Frequenzweichen.

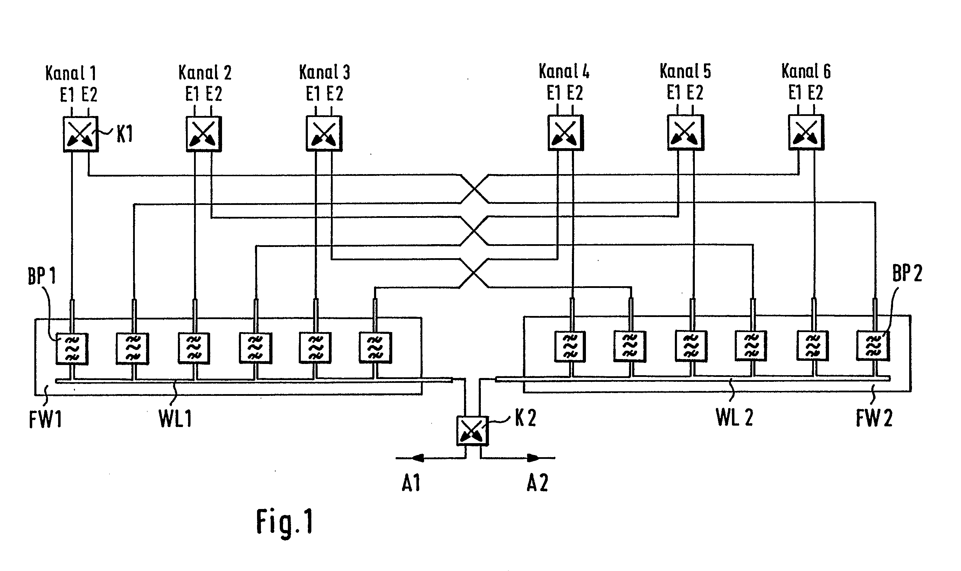

Bei dem der Fig. 1 zu entnehmenden Multiplexer wird die Signalleistung eines jeden Frequenzkanals 1 ... 6 auf zwei Frequenzweichen FW1 und FW2 aufgeteilt. Jede der Frequenzweichen FW1 und FW2, welche hier nur schematisch dargestellt sind, bestehen in an sich bekannter Weise aus mehreren z.B. in Hohlleitertechnik ausgeführten Bandpaßfiltern BP1 und BP2, von denen jedes auf einen der vorhandenen Frequenzkanäle abgestimmt ist, und einem gemeinsamen Wellenleiter WL1 bzw. WL2, z.B. ein Sammelhohlleiter, an den alle Bandpaßfilter BP1 bzw. BP2 angekoppelt sind. Die Leistungsaufteilung der Signale auf die beiden Frequenzweichen FW1 und FW2 besorgen 3 dB-Koppler K1, von denen für jeden Frequenzkanal einer vorhanden ist. Die 3 dB-Koppler K1 besitzen 4 Tore. Zwei Tore dienen als Signaleingänge E1 und E2. Von den anderen zwei Toren eines jeden 3 dB-Kopplers K1 ist eins mit einem Bandpaßfilter BP1 der Frequenzweiche FW1 und das andere mit einem Bandpaßfilter BP2 der Frequenzweiche FW2 verbunden, und zwar sind die Tore an diejenigen Bandpaßfilter BP1 und BP2 angeschlossen, welche beide auf den dem jeweiligen 3 dB-Koppler K1 zugeordneten Frequenzkanal abgestimmt sind.

Die Ausgänge der Sammelhohlleiter WL1 und WL2 der beiden Frequenzweichen FW1 und FW2 sind an zwei Tore eines weiteren 4-torigen 3 dB-Kopplers K2 gelegt, dessen andere zwei Tore Signalausgänge A1 und A2 des Multiplexers darstellen.

Werden nun beispielsweise an die Eingänge E1 der 3 dB-Koppler K1 Signale verschiedener Frequenzkanäle angelegt, so teilen die 3 dB-Koppler K1 diese Eingangssignale jeweils in zwei gleich große Leistungsanteile auf und führen jeder der beiden Frequenzweichen FW1 und FW2 einen Leistungsanteil zu; d.h. jede einzelne Frequenzweiche wird nicht mit der gesamten, sondern nur mit der halben Signalleistung beaufschlagt. Die zu jedem Eingangssignal gehörenden, aus den Frequenzweichen FW1 und FW2 wieder austretenden Leistungsanteile werden vom 3 dB-Koppler K2 einander überlagert, und an einem der beiden Signalausgänge, z.B. am Tor A1, erscheint jedes Signal mit seiner gesamten Leistung. Eingangssignale, die an den anderen Eingängen E2 der 3 dB-Koppler K1 eingespeist werden, erscheinen mit ihrer vollen Leistung am anderen Signalausgang, dem Tor A2 des 3 dB-Kopplers K2. Je nachdem, welchem Eingang der 3 dB-Koppler K1 die Eingangssignale zugeführt werden, stehen sie als Multiplexausgangssignal entweder an dem einen oder dem anderen Tor A1 oder A2 des 3 dB-Kopplers K2 zur Verfügung.

Es ist zweckmäßig, bei den beiden Frequenzweichen FW1 und FW2 Bandpaßfilter BP1 und BP2 gleicher Frequenzkanäle in gleichen Abständen vom Ausgang der Sammelhohlleiter WL1 und WL2 anzuordnen, damit die jeweils zusammengehörenden Leistungsanteile in beiden Frequenzkanälen möglichst die gleiche Phasenlaufzeit erfahren. Denn nur, wenn die dem 3 dB-Koppler K2 zugeführten Leistungsanteile eine feste Phasendifferenz von 90° aufweisen, erfolgt eine phasenrichtige Addition der beiden Leistungsanteile an einem der Tore A1, A2 des 3 dB-Kopplers K₂. Da nämlich die 90° Phasendifferenz der beiden Leistungsanteile bereits an den Ausgangstoren der mit den Bandpaßfiltern BP1, BP2 der Frequenzweichen FW1, FW2 verbundenen 3 dB-Koppler K1 vorliegt, sollten für beide Leistungsanteile die Leitungswege bis zum 3 dB-Koppler L2 an den Ausgängen der Frequenzweichen FW1, FW2 gleich lang sein, damit die zusammengehörenden Leistungsanteile auf den Leitungswegen keine zusätzliche gegenseitige Phasenverschiebung erfahren. Sollte die Bedingung der gleich langen Leitungswege nicht erfüllt werden können, müssen Phasenausgleichsglieder vorgesehen werden, welche die gewünschte Phasenbeziehung herstellen.

Die vorangehend als Multiplexer beschriebene Anordnung kann auch die Funktion eines Demultiplexers erfüllen, wenn sämtliche 3 dB-Koppler K1 und K2 und die Frequenzweichen FW1 und FW2 invers betrieben werden.

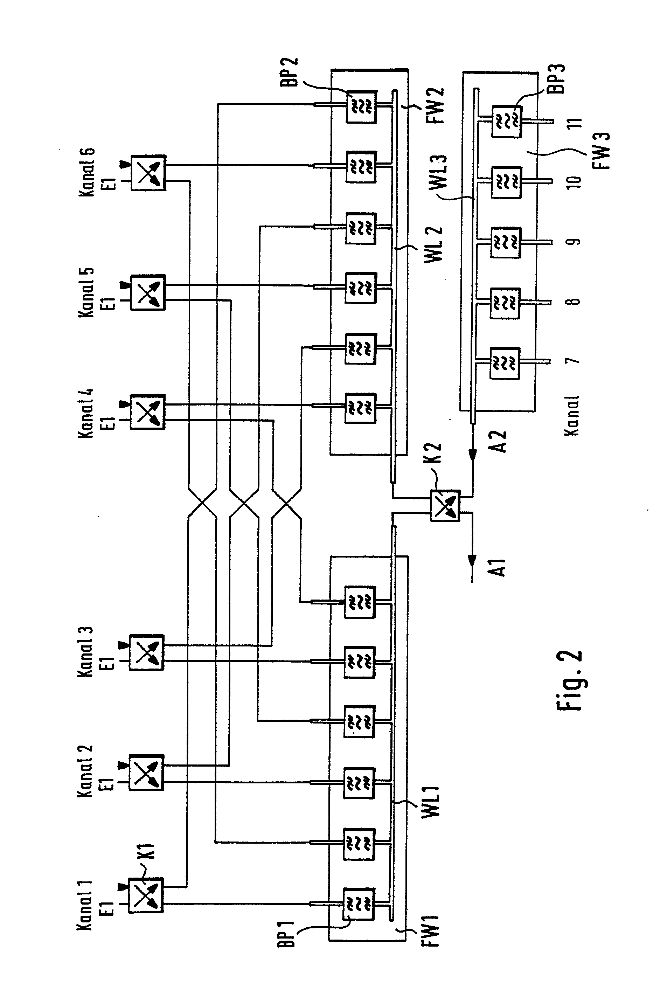

Der in der Fig. 2 dargestellte Multiplexer ist gegenüber dem der Fig. 1 zu entnehmenden nur dadurch abgeändert, daß an das Tor A2 des 3 dB-Kopplers K2 eine dritte Frequenzweiche FW3 angeschlossen ist, die wie die anderen Frequenzweichen auch aus mehreren an einem gemeinsamen Wellenleiter (Sammelhohlleiter) WL3 angekoppelten Bandpaßfilter BP3 besteht. Die Bandpaßfilter BP3 dieser dritten Frequenzweiche FW2 sind auf zusätzliche andere Frequenzkanäle 7 ... 11 abgestimmt als die Bandpaßfilter BP1 und BP2 der Frequenzweiche F1 und F2. Werden in die Bandpaßfilter BP3 der dritten Frequenzweiche Signale eingespeist, so gelangen sie über den gemeinsamen Wellenleiter WL3 zusammengefaßt (gemultiplext) an das Tor A2 des 3 dB-Kopplers K2. Der 3 dB-Koppler K2 teilt sie leistungsgemäß auf seine beiden mit den Frequenzweichen FW1 und FW2 verbundenen Tore auf. Diese Leistungsanteile werden aber an den auf andere Frequenzkanäle abgestimmten Bandpaßfiltern BP1 und BP2 der Frequenzweichen FW1 und FW2 reflektiert und werden schließlich von dem 3 dB-Koppler K2 an seinem Tor A1 wieder addiert. Damit die Signale der anderen Frequenzkanäle 1 ... 6 auch am Tor A1 und nicht an dem mit der Frequenzweiche FW3 verbundenen Tor A2 des 3 dB-Kopplers erscheinen, müssen die Signale an dem dies gewährleistenden Eingangstor E1 der 3 dB-Koppler K1 gelegt werden. Das andere Eingangstor der 3 dB-Koppler K1 ist in diesem Fall reflexionsfrei abgeschlossen. Wie anhand der Fig. 2 dargelegt, läßt sich also die Zahl der Frequenzkanäle des Multiplexers auf sehr einfache Weise noch erhöhen, ohne daß seine Leistungsverträglichkeit überstiegen wird.

## Ansprüche

1. Anordnung zum Multiplexen von Signalen im Mikrowellenbereich, die verschiedenen Frequenzkanälen zugeordnet sind, dadurch gekennzeichnet, daß mindestens zwei Frequenzweichen (FW1, FW2) vorgesehen sind, von denen jede in an sich bekannter Weise aus mehreren auf die vorhandenen Frequenzkanäle abgestimmten Bandpaßfiltern (BP1, BP2), die an einen gemeinsamen Wellenleiter (WL1, WL2) angekoppelt sind, gebildet ist, daß erste Mittel (K1) vorhanden sind, welche jedes Eingangssignal in mehrere Leistungsanteile aufteilt und jeden Leistungsanteil in eine der vorhandenen Frequenzweichen (FW1, FW2) und zwar in dasjenige Bandpaßfilter (BP1, BP2) einspeist, das auf den Frequenzkanal des jeweiligen Eingangssignals abgestimmt ist, und daß zweite Mittel (K2) vorhanden sind, welche die aus den Frequenzweichen (FW1, FW2) austretenden, zu jeweils einem Signal gehörenden Leistungsanteile einander überlagern.

2. Anordnung nach Anspruch 1, dadurch gekennzeichnet, daß die ersten Mittel (K1), die zweiten Mittel (K2) und die Frequenzweichen (FW1, FW2), invers betrieben, einen Demultiplexer bilden.

3. Anordnung nach Anspruch 1 oder 2, dadurch gekennzeichnet, daß die ersten Mittel 3 dB-Koppler (K1) sind, von denen je Frequenzkanal einer vorgesehen ist, daß zwei Frequenzweichen (FW1, FW2) vorhanden sind, daß jeder 3 dB-Koppler (K1) mit einem ersten Tor an das auf den ihm zugeordneten Frequenzkanal abgestimmte Bandpaßfilter (BP1) der einen Frequenzweiche (FW1) und mit einem zweiten Tor an das auf denselben Frequenzkanal abgestimmte Bandpaßfilter (BP2) der anderen Frequenzweiche (FW2) angeschlossen ist und mindestens eins von zwei weiteren Toren des 3 dB-Kopplers im Multiplexbetrieb der Anordnung als Signaleingang (E1, E2) bzw. im Demultiplexbetrieb als Signalausgang dient und daß der Wellenleiter (WL1, WL2) einer jeden Frequenzweiche (FW1, FW2) zu einem Tor eines die zweiten Mittel darstellenden 3 dB-Kopplers (K2) führt, von dem mindestens eines von zwei weiteren Toren im Multiplexbetrieb als Signalausgang (A1, A2) und im Demultiplexbetrieb als Signaleingang dient.

4. Anordnung nach Anspruch 3, dadurch gekennzeichnet, daß bei ihrem Betrieb als Multiplexer an ein Tor (A2) des an die Wellenleiter (WL1, WL2) der beiden Frequenzweichen (FW1, FW2) angeschlossenen 3 dB-Kopplers (K2) eine dritte Frequenzweiche (FW3), die ebenfalls aus mehreren an einen Wellenleiter (WL3) angekoppelten Bandpaßfiltern besteht, mit ihrem Wellenleiter (WL3) angeschaltet ist, und daß die Bandpaßfilter (BP3) der dritten Frequenzweiche (FW3) für die Einspeisung von Signalen weiterer Frequenzkanäle ausgelegt sind.

5. Anordnung nach einem der vorhergehenden Ansprüche, dadurch gekennzeichnet, daß die Bandpaßfilter (BP1, BP2, BP3) der Frequenzweichen (FW1, FW2, FW3) in Hohlleitertechnik ausgeführt sind und daß die Wellenleiter (WL1, WL2, WL3), woran die Bandpaßfilter (BP1, BP2, BP3) angekoppelt sind, Hohlleiter sind.

Fig.1

EP 0 345 496 A2

Fig. 2

Kanal 1 Kanal 2 Kanal 3 Kanal 4 Kanal 5 Kanal 6
E1 E1 E1 E1 E1 E1

K1

BP 1 BP 2

FW 1 WL1 WL 2 WL 3 FW 2

K 2

A1 A2

Kanal 7 8 9 10 11

BP 3

FW 3

EP 0 345 496 A2

BK 88/45